# EUROPÄISCHE PATENTANMELDUNG

(11) **EP 2 754 529 A1**
(43) Veröffentlichungstag der Anmeldung: **16.07.2014**
(21) Anmeldenummer: 13150978.8
(22) Anmeldetag: 11.01.2013
(51) Int. Cl.: B23K 35/30, C22C 19/03, C22C 19/07

(54) **Borfreies Lot mit Mangan und Germanium, Pulver und Reparaturverfahren**

(71) Anmelder: Siemens Aktiengesellschaft, 80333 München (DE)
(72) Erfinder: Ott, Michael, 45470 Mülheim an der Ruhr (DE); Piegert, Sebastian, 10777 Berlin (DE)

(57) **Zusammenfassung**

Durch die Verwendung von Mangan und Germanium als Legierung können gelötete Substrate bei hohen Temperaturen eingesetzt werden.

## Beschreibung

Die Erfindung betrifft eine Legierung mit Nickel, Mangan und Germanium, die insbesondere zum Löten eingesetzt werden kann.

Bei der Reparatur von Bauteilen werden auch Lötverfahren eingesetzt, wobei als Lötmaterial oft vergleichbare oder gleiche Materialien wie im zu reparierenden Substrat verwendet werden und ein Schmelzpunkterniedriger wie z.B. Bor oder Silizium zugeführt wird.
Die Schmelzpunkterniedriger führen allerdings auch zu unerwünschten Ausscheidungen, die die Eigenschaften des Substrats und damit der reparierten, gelöteten Stelle reduzieren.
Dies ist nicht gewünscht.

Es ist daher Aufgabe der Erfindung eine Legierung aufzuzeigen, die frei von Bor oder Silizium ist und keine unerwünschten Ausscheidungen aufweist.

Die Aufgabe wird gelöst durch eine Legierung gemäß Anspruch 1, ein Pulver gemäß Anspruch 15 und ein Verfahren gemäß Anspruch 16.

Es zeigen:

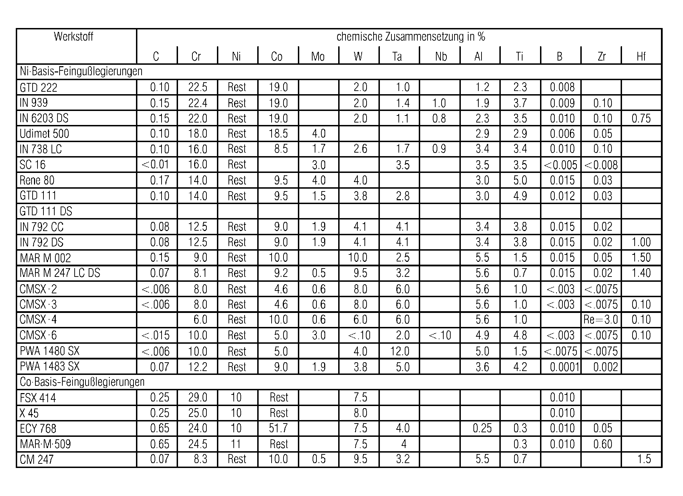

- Figur 1: eine Liste von Superlegierungen.

Die Beschreibung und die Figur stellen nur Ausführungsbeispiele der Erfindung dar.

Erfindungsgemäß wird ein zumindest ternäres System aus Nickel-Mangan-Germanium (Ni-Mn-Ge) verwendet, wobei außerdem noch Gallium (Ga) hinzugefügt werden kann, das zumindest teilweise Germanium (Ge) ersetzen kann.
Legierungselement bedeutet, dass der Anteil sehr deutlich über der Verunreinigungsgrenze liegt.

Ein vorteilhafter Wertebereich (in at%) ist:
1% bis 60 % Mangan (Mn), wobei vorzugsweise höchstens 25at% Mangan (Mn) verwendet wird.
Die Mindestwerte für Mangan (Mn) liegen bei 2at%, 5at% oder 10at%.
Die Werte für Germanium (Ge) liegen bei 1% bis 15 %.
Sowie weist die Legierung 0% bis 23 % Gallium (Ga) und Nickel (Ni) auf, wobei vorzugsweise höchstens 10at% Germanium (Ge) verwendet werden.
Die Mindestwerte an Germanium (Ge) betragen vorzugsweise 2at% oder 5at%.

Darüber hinaus können zu der Legierung Aluminium (Al) und/oder Chrom (Cr) und weitere Bestandteile (Molybdän (Mo), Titan (Ti), Tantal (Ta), Wolfram (W), ...) von bekannten Kobalt- oder Nickel-basierten Superlegierungen gemäß Figur 1 verwendet werden, aber keine Schmelzpunkterniedriger Silizium (Si) und/oder Bor (B).

Diese Legierung bzw. ein Pulver aufweisend diese Legierung kann in einem isothermalen Verfahren auf ein Substrat aufgebracht werden und eine Vertiefung oder einen Riss auffüllen oder mittels eines Temperaturgradienten-Verfahren erstarren gelassen werden.
Bei beiden thermischen Verfahren kann die kristallographische Struktur des Substrats übernommen werden, was bei gerichtet erstarrten Nickelbasis-Superwerkstoffen eine kolumnare oder eine einkristalline Struktur darstellt.

Die Legierung kann in Form eines Pulvers, eines Schlickers, eines massiven Materials oder einer Folie aufgebracht werden.

Die Zugabe von Germanium/Mangan führt zur Reduzierung der Schmelztemperatur und fördert auch die Ausscheidungshärtung dieser Legierung durch germaniumbasierte Gamma-Ausscheidungen.

## Patentansprüche

1. Legierung,
die als Legierungselemente zumindest aufweist:
Nickel (Ni),
Mangan (Mn), Germanium (Ge) und
optional Gallium (Ga) und
optional weitere Legierungselemente von Kobalt- oder
Nickel-basierten Superlegierungen.

2. Legierung nach Anspruch 1,
wobei die Legierung Germanium (Ge) und kein Gallium (Ga) aufweist.

3. Legierung nach Anspruch 1,
wobei die Legierung Germanium (Ge) und Gallium (Ga) aufweist.

4. Legierung nach einem oder mehreren der Ansprüche 1 bis 3,
die 1at% bis 60at% Mangan (Mn) aufweist,
insbesondere 1at% bis 25at% Mangan aufweist.

5. Legierung nach einem oder mehreren der Ansprüche 1 bis 4,
die mindestens 2at% Mangan (Mn),
insbesondere mindestens 5at% Mangan (Mn),
ganz insbesondere mindestens 10at% Mangan (Mn), aufweist.

6. Legierung nach einem oder mehreren der Ansprüche 1 bis 5,
die 1at% bis 15at% Germanium (Ge) aufweist,
insbesondere 1at% bis 10at% Germanium (Ge) aufweist.

7. Legierung nach einem oder mehreren der Ansprüche 1 bis 6,
die mindestens 2at% Germanium (Ge),
insbesondere mindestens 5at% Germanium (Ge),
aufweist.

8. Legierung nach einem oder mehreren der Ansprüche 1 bis 7,
die 1at% bis 23at% Gallium (Ga) aufweist.

9. Legierung nach einem oder mehreren der Ansprüche 1 bis 8,
die 1at% bis 23at% Gallium (Ga) und Germanium (Ge) aufweist.

10. Legierung nach einem oder mehreren der Ansprüche 1 bis 9,
die Aluminium (Al) und/oder Chrom (Cr) aufweist, insbesondere Aluminium (Al) und Chrom (Cr) mit jeweils mindestens 1at%.

11. Legierung nach einem oder mehreren der Ansprüche 1 bis 10,
die kein Bor (B) und/oder kein Silizium (Si) aufweist.

12. Legierung nach einem oder mehreren der Ansprüche 1 bis 11,
die Molybdän (Mo) und/oder Titan (Ti) und/oder Tantal (Ta) und/oder Wolfram (W) aufweist.

13. Legierung nach einem oder mehreren der Ansprüche 1 bis 12,
die nickelbasiert ist.

14. Legierung nach einem oder mehreren der Ansprüche 1 bis 12,
die kobaltbasiert ist.

15. Pulver,
das eine Legierung nach einem oder mehreren der Ansprüche 1 bis 14 aufweist,
insbesondere daraus besteht.

16. Verfahren zur Reparatur eines Bauteils,
bei dem eine Legierung nach einem oder mehreren der vorherigen Ansprüche 1 bis 14 oder ein Pulver gemäß Anspruch 15 verwendet wird,
insbesondere zur Reparatur eines Bauteils aus einer Kobalt- oder Nickel-basierten Superlegierung.

17. Verfahren nach Anspruch 16,
bei dem ein isothermales Lotverfahren durchgeführt wird.

18. Verfahren nach Anspruch 16,
bei dem ein Temperaturgradientenverfahren beim Löten angewendet wird.
